**Europäisches Patentamt**

**European Patent Office**

**Office européen des brevets**

(19)

(11) Veröffentlichungsnummer: **0 129 532**

**B1**

(12)

# EUROPÄISCHE PATENTSCHRIFT

(45) Veröffentlichungstag der Patentschrift:
02.09.87

(21) Anmeldenummer: **84890034.6**

(22) Anmeldetag: **29.02.84**

(51) Int. Cl.⁴: **B 07 C 5/14**

(54) Vorrichtung zum Sortieren und Sammeln von Stückgut, insbesondere Schnittholz.

(30) Priorität: **18.03.83 AT 961/83**

(43) Veröffentlichungstag der Anmeldung:
**27.12.84 Patentblatt 84/52**

(45) Bekanntmachung des Hinweises auf die Patenterteilung:
**02.09.87 Patentblatt 87/36**

(84) Benannte Vertragsstaaten:
**CH DE FR IT LI SE**

(56) Entgegenhaltungen:
**US-A-3 155 245**
**US-A-3 606 011**

(73) Patentinhaber: **Rumplmayr, Friedrich Klaus, Dipl.-Ing., Eben 345, A-4813 Altmünster (AT)**

(72) Erfinder: **Rumplmayr, Friedrich Klaus, Dipl.- Ing., Eben 345, A-4813 Altmünster (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

EP 0 129 532 B1

## Beschreibung

Die Erfindung betrifft eine Vorrichtung zum Sortieren und Sammeln von Stückgut, insbesondere Schnittholz, mit einem oberen, etwa horizontalen Sortierförderer, einer Reihe entlang des Sortierförderers angeordneter Sammelkammern für das vom Sortierförderer sortiert abgeschiedene Gut und einem unterhalb der Sammelkammern verlaufenden, ebenfalls etwa horizontalen Entnahmeförderer, wobei die kanalartigen Sammelkammern jeweils abwärts geneigte, an absperrbare Vorkammern od.dgl. anschließende Führungsbahnen und in Abhängigkeit von der Menge des anfallenden Gutes das Fassungsvermögen der Sammelkammern vergrößernde Speichereinrichtungen aufweisen.

Bei diesen Sortier- und Sammelvorrichtungen wird das beispielsweise von der Säge kommende Schnittholz oder anderes, mehr oder weniger kontinuierlich anfallendes Stückgut dem Sortierförderer vereinzelt und vermessen übergeben, der die Einzelstücke der Reihe nach, den Messungen entsprechend, in die den einzelnen Sorten zugeordneten Sammelkammern abwirft. In diesen Sammelkammern werden die sortierten Einzelstücke bis zu einer gewünschten, für die Bildung eines Paketes, eines Stapels od.dgl. erforderlichen Menge gehortet, wozu die Speichereinrichtungen das Fassungsvermögen der Sammelkammern bis zum gewünschten Maß vergrößern und anschließend den ganzen Kammerinhalt auf den Entladeförderer ausladen, der dann die verschiedenen Sortimente über eine Vereinzelungsstation zur Paketier- oder Stapelstation bringt.

Abgesehen von rein schachtförmigen, aufrecht stehenden Sammelkammern, gibt es gemäß der US-A-3 155 245 auch bereits kanalartige Sammelkammern mit abwärts geneigten Führungsbahnen und verfahrbaren, bis in den Bereich des Entnahmeförderers absenkbaren Kammerböden als Speichereinrichtung. Das vom Sortierförderer abgeworfene Stückgut fällt hier frei auf Gleitflächen von vorkammerähnlichen Abschnitten der Führungsbahnen ab, die so steil sein müssen, daß ein Abgleiten des Stückgutes bis zum Kammerboden unter allen Umständen sichergestellt ist. In den Sammelkammern entstehen daher entlang der Führungsbahnen relativ ungeordnete Stückguthaufen und diese Unordnung wird auf dem Weg der Haufen durch die Kammern und beim Entleeren auf den Entnahmeförderer, wozu eigene Übergabeförderer notwendig sind, weiter gesteigert, so daß beim anschließenden, dem Stapeln bzw. Paketieren vorausgehenden Entzerren der Sortimenthaufen Unregelmäßigkeiten und Störungen auftreten. Darüber hinaus gehen durch das Abfallen der Stückgüter in die Sammelkammern bzw. durch die Übergabe auf den Entnahmeförderer und durch das Vereinzeln der ungeordneten Haufen, insbesondere bei getrocknetem Holz, viele Stücke, vor allem Stücke kleinerer Querschnitte, zu Bruch und ergeben nicht nur eine große Ausschußquote, sondern stellen zudem eine weitere Störungsquelle dar. Um zu verhindern, daß bestimmte Stückzahlen pro Sortiment während des Entleervorganges der Kammern durch weitere Beschickung verändert werden, sind zwar die vorkammerähnlichen Abschnitte der Sammelkammern von den übrigen Führungsbahnbereichen durch Sperren trennbar, doch werden diese Sperren beim Befüllen der Kammern wieder weggeschwenkt und können den Sortiervorgang nicht verbessern. Auch das Entleeren der einzelnen Sammelkammern selbst birgt Gefahren von Störungen und Stückgutbeschädigungen, da die in den Kammern zu einem aufrechten Querschnitt angehäufte Stückgutmenge durch das Absetzen auf den Entnahmeförderer, unabhängig davon ob eigene aufwendige Übergabeförderer oder einfache Abwurfklappen vorhanden sind, zu einem liegenden Querschnitt umgeschichtet werden muß, wodurch sich große Bewegungen der Einzelstücke im Raufen ergeben, die Gefahr von Verklausungen im Bereich der Kammeraustrittsöffnungen besteht usw. Um daher die Belastung für die Einzelstücke der Sortimente zu verringern und Betriebsstörungen möglichst zu vermeiden, kann von vornherein nur mit recht geringer Fördergeschwindigkeit sortiert und entleert werden.

Es gibt auch schon sogenannte Etagen- oder Lagensortierer, bei denen das Stückgut von einem schräggeführten Sortierförderer in etwa horizontal übereinander angeordneten Sammelkammern abgegeben wird. Hier werden die sortierten Einzelstücke auf einem Etagenförderer nach Maßgabe der Befüllung kontrolliert weitertransportiert, so daß die Stückgüter in einer geordneten Schicht gesammelt werden. Ist die gewünschte Stückgutmenge erreicht, muß dann diese Schicht über einen Entladeförderer den Sammelkammern entnommen werden, welche Entladeförderer sich mittels einer Schwenkbrücke od.dgl. zur Ausgangsöffnung der zu entleerenden Kammer heben oder senken lassen. Ist für eine solche Schwenkbrücke zu wenig Platz vorhanden, kann als Entladeförderer auch ein mit dem der Stapel- oder Paketierstation vorgeordneten, schräg aufwärts führenden Vereinzelungsförderer zusammenwirkender Zwischenförderer verwendet werden, der entlang des Vereinzelungsförderers verstellbar lagert und die Ausgabeöffnung der zu entleerenden Kammer direkt mit dem Vereinzelungsförderer verbindet. Bei diesen Etagen- oder Lagesortierern ergeben sich durch die übereinanderliegenden Sammelkammern verhältnismäßig kleine Öffnungsquerschnitte für die Beschickung der einzelnen Kammern, was bei höherer Fördergeschwindigkeit des Sortierförderers oder bei größeren Stückquerschnitten zu sehr kurzen Öffnungszeiten der den horizontalen Sammelkammern zugeordneten Abscheideklappen führt. Daher ist auch die Sortierleistung sehr beschränkt und der Sortiervorgang störanfällig und außerdem ziehen auf Grund der großen vorhandenen Massenträgheitskräfte schon kleinste Unregelmäßigkeiten der Steuerung, geringe Hemmungen u.dgl. sofort große Schäden der ganzen Anlage nach sich. Dazu kommt noch, daß die Sammelkammern wegen der geringen Lagenhöhe sehr lang sein müssen, um die gewünschten Stückgutzahlen unterzubringen, wobei die Baulänge noch dadurch vergrößert wird, daß die Richtung der Beschickung über den Sortierförderer gleich sein muß wie die der Entleerung über den Entladeförderer. Außerdem führt das Übereinanderliegen der Sammelkammern zu einer extremen Bauhöhe der Anlage, die von vornherein die Anzahl der möglichen Sortimente stark beschränkt. Je größer die Bauhöhe, also je mehr Ssmmelkammern übereinander liegen, desto größer wird auch auf Grund der begrenzten Neigung des Entladeförderers der Aufwand für die Kammerentleerung und umso größer wird auch die Störanfälligkeit und, bedingt durch die Gefahr des Abfallens von Einzelstücken aus großer Höhe, die Schadenshäufigkeit. Die Sortiergeschwindigkeit bleibt wiederum vergleichsweise niedrig, da sie zu stark vom Entladevorgang der einzelnen Kammern abhängig ist, und nicht nur die Anzahl der Sortimente, sondern auch deren Größe muß innerhalb enger Grenzen bleiben, womit dann noch eine schlechte Ausnutzung der Anlage verbunden ist, die ja in ihrer Gesamtheit nach der belastetsten Sammelkammer auszurichten ist.

Der Erfindung liegt daher die Aufgabe zugrunde, diese Mängel zu beseitigen und eine Vorrichtung der eingangs geschilderten Art zu schaffen, die alle Vorteile der bekannten Sortierer unter Vermeidung derer Nachteile in sich vereinigt und ein rasches, funktionssicheres Aussortieren beliebig vieler Sortimente bei vergleichsweise geringem Konstruktions- und Bauaufwand erlaubt.

Die Erfindung löst diese Aufgabe dadurch, daß die Führungsbahnen flacher als dem natürlichen Böschungswinkel eines Haufens des Stückgutes entsprechend geneigtsind, daß die Vorkammern mit einer Stufe in die Sammelkammern übergehen und von diesen durch eine Stauklappe trennbar sind und daß die Speichereinrichtungen einen den Führungsbahnen entlang verlaufenden Sammelförderer umfassen, der im Maße der Beschickung abwärts wandert und die vom Sortierförderer abgeschiedenen, über die Vorkammer und die Stauklappe ausgerichteten Stückgüter zu einer annähernd gleichmäßigen Schicht mit von der Vorkammerstufe bestimmter Höhe sammelt.

Die abgeschiedenen Einzelstücke werden durch das Passieren der Vorkammer ausgerichtet und bei Eintritt in die Sammelkammer durch die Stauklappe zu einer geordneten Schicht angehäuft, die im Maße des Befüllungsfortschrittes anwächst und in die Sammelkammern hineinwandert. Die Stauklappen erlauben es, die anfallenden Stücke bei Füllungsbeginn der Kammern zurückzuhalten, bis die Stufe aufgefüllt und damit die Herstellung einer Gutschicht in der durch die Stufenhöhe bestimmten Stärke sichergestellt ist, und gewährleisten außerdem die Ordnung der Einzelstücke bei Schichtanfang. Der Sammelförderer sorgt dann für ein kontrolliertes Abwärtsfördern der Schicht ohne gegenseitige Lageänderung der Einzelstücke innerhalb der Schicht, so daß auch nach Erreichen der gewünschten Stückzahl das ganze Sortiment geordnet vorliegt und sich im Bodenbereich durch das Gewicht der Einzelstücke kein hoher Staudruck ergibt. Die gesammelte Schicht kann dann ohne Schwierigkeiten und ohne gröbere Richtungsänderung dem Entnahmeförderer übergeben werden, was zudem ein kontrolliertes Entleeren mit sich bringt. Das Sammeln der Stücke erfolgt ohne Störungsgefahr rasch und zügig und, da die Stauklappen während des Entleerens der Kammern schließen und die ankommenden Stücke in der Vorkammer zurückhalten, kommt es auch zu einer ungestörten Entleerung, wobei der Sortiervorgang wegen der Warteraumfunktion der Vorkammern nicht unterbrochen zu werden braucht. Da die Einzelstücke weder beim Ausscheiden vom Sortierförderer noch beim Entleeren der Sammelkammern im freien Fall abgeworfen werden und der gemeinsamen Vereinzelungsstation ein geordnetes Sortiment zugefördert wird, ist praktisch auch jede Bruchgefahr für das Stückgut beim Sortieren ausgeschaltet. Trotzdem lassen sich die Sammelkammern beliebig aneinanderreihen, entsprechend lang ausgestalten und auch nachträglich noch anbauen, so daß es weder in der Anzahl noch im Umfang der Sortimente Beschränkungen gibt. Bei äußerst behutsamer Behandlung des Stückgutes und funktionssicherem Betrieb können auch für Stückgut unterschiedlichster Dimensionen auf engstem Raume höchste Sortierleistungen erreicht werden.

Bestehen die Sammelförderer aus den Führungsbahnen entlang angeordneten Rollen und verschiebbaren, am Ausgabeende der Sammelkammern auswärts auf den Entnahmeförderer abklappbaren Kammerböden, läßt sich mit geringem Bauaufwand das Sammeln der Einzelstücke in einer gleichmäßigen dünnen Schicht bewerkstelligen, da hierzu der Kammerboden lediglich entsprechend der Befüllung abwärts bewegt zu werden braucht. Die sich bildende Schicht der sortierten Stücke schließt sich dabei, auf den Rollen transportiert, an den Kammerboden an und wird beim Entleeren durch das Abklappen des Kammerbodens kontinuierlich dem Entnahmeförderer übergeben.

Dient als Sammelförderer ein vorzugsweise Mitnehmer aufweisender Endlosförderer, an den am Ausgabeende der Sammelkammern eine auswärts auf den Entnahmeförderer abschwenkbare Bodenklappe anschließt, kann die entstehende Stückgutschicht besonders exakt und störungsfrei ausgerichtet, gesammelt und entleert werden, da eine zwangsweise Abwärtsförderung der Schicht erfolgt und Roll- und Reibungsverhältnisse beim Abtransport ohne Einfluß bleiben. Die abschwenkbare Bodenklappe sorgt dann auch hier für eine gleitende Übergabe der Schicht an den Entnahmeförderer ohne ein die Ordnung gefährdendes Abwerfen des Sortiments.

Günstig ist es auch, wenn im Bereich der Vorkammerstufen eine bei geschlossener Stauklappe den Sammelförderer überbrückende Gutauflage vorgesehen ist. Diese Gutauflagen gestatten es, den Förderer bis über die Stauklappen hinaus reichen zu lassen, da diese Auflagen beim Entleeren den Sammelförderer abdecken und die anfallenden Stücke im Stauklappenbereich vor einer frühzeitigen Berührung mit diesem Förderer abhalten. Öffnet dann die Stauklappe, wird die Auflage wieder weggenommen und der Sammelförderer kommt ordnungsgemäß zur Wirkung.

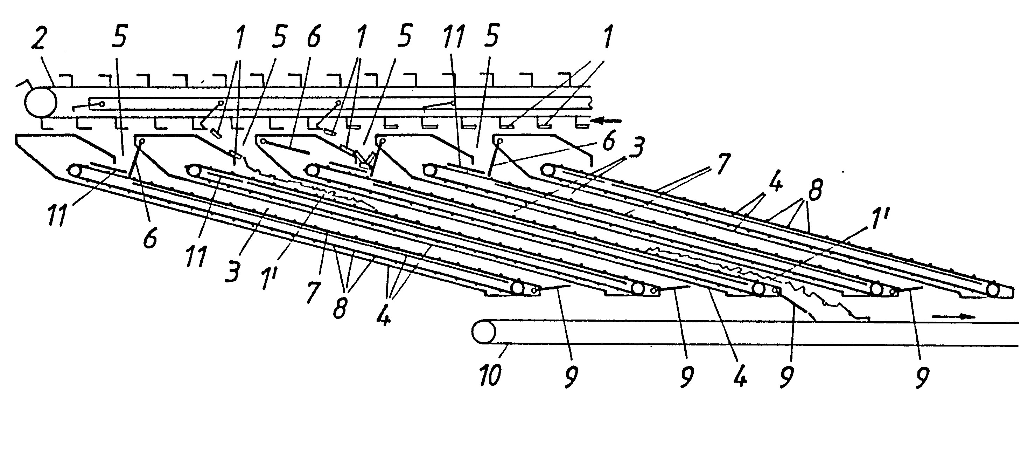

Im der Zeichnung ist der Erfindungsgegenstand rein schematisch an Hand eines Ausführungsbeispieles veranschaulicht.

Zum Sortieren von Schnittholz werden die einzelnen Hölzer 1 querliegend einem horizontalen Sortierförderer 2 übergeben, der oberhalb einer Reihe von Sammelkammern 3 verläuft und die Hölzer nach Maßgabe der in einer nicht weiter dargestellten Meßstation erfaßten Sortierkriterien einzeln in die zugehörigen Sammelkammern 3 abscheidet. Diese Sammelkammern sind kanalartig ausgebildet und so flach abwärts geneigt, daß der Neigungswinkel ihrer Führungsbahnen 4 kleiner ist als der natürliche Böschungswinkel eines Haufens von Hölzern 1. Den Sammelkammern 3 zum Sortierförderer 2 hin vorgeordnet sind Vorkammern 5, die mit einer Stufe in die Sammelkammern übergehen und von diesen durch eine Stauklappe 6 getrennt werden können. Die Sammelkammern 3 selbst nehmen den Kammern entlang abwärtsführende Endlosförderer 7, die mit Mitnehmern 8 bestückt sind, auf und werden am Ausgabeende von auswärts aufschwenkbaren Bodenklappen 9 abgeschlossen. Unterhalb der Sammelkämmern 3 im Bereich der Bodenklappen 9 ist ein Entnahmeförderer 10 vorgesehen, der die in den Kammern 3 gesammelten Sortimente zum Vereinzeln, Stapeln oder Paketieren abtransportiert.

Die vom Sortierförderer 2 abgeschiedenen Hölzer 1 gelangen nun über die Vorkammern 5, durch die Stufe und die Stauklappe 6 ausgerichtet, in die Sammelkammern 3, wo sie auf den Endlosförderern 7 zu einer recht gleichmäßigen Schicht 1' mit etwa der Stufe entsprechender Höhe angehäuft werden, indem der Endlosförderer 7 im Maße der Befüllung abwärts wandert. Es kommt zu einem kontrollierten Aufschichten der Hölzer 1 innerhalb der Sammelkammern 3 und die gegebene Ordnung der entstehenden Schicht 1' ändert sich auch auf dem Endlosförderer 7 nicht mehr. Die Schicht 1' wird aufgebaut, bis eine gewünschte Anzahl an Hölzern gesammelt ist, worauf diese fertige Schicht 1' mit dem Endlosförderer 7 abwärts gefahren wird und sich die Stauklappe 6 im freien Raum nach der Schicht schließt. Die weiter in diese Sammelkammer 3 ausgeschiedenen Hölzer 1 sammeln sich nun vorläufig in der Vorkammer 5, während davon unbeeinflußt die Sammelkammer 3 entleert wird, indem die Bodenklappe 9 auf den Entnahmeförderer 10 abschwenkt und die Schicht 1' über die sich durch die Bodenklappe 9 ergebende Brücke auf den Entnahmeförderer aufgeladen wird, ohne ihre innere Ordnung zu verlieren. Nach Beendigung dieser Entleerung schließt die Bodenklappe 9 und die Stauklappe 6 öffnet wieder, so daß eine neue Schichtbildung beginnen kann. Damit es während der Entleerung im Vorkammerbereich durch die geschlossene Stauklappe 6 einerseits und den laufenden Endlosförderer 7 anderseits zu keinen Störungen kommt, ist hier eine heb- und senkbare Auflage 11 vorgesehen, die bei geschlossener Stauklappe 6 den Endlosförderer 7 abdeckt und eine Berührung der ausgeschiedenen Hölzer 1 mit dem Endlosförderer 7 vermeidet.

Die erfindungsgemäße Vorrichtung zeichnet sich durch ihre rasche, rationelle, funktionssichere und materialschonende Arbeitsweise aus, die es außerdem noch ermöglicht, die Sammelkammern ohne Unterbrechung des Sortiervorganges zu entleeren und die Sortimente unabhängig von ihrer Zahl und ihrer Größe stets geordnet und kontrolliert dem Entnahmeförderer übergeben zu können.

**Patentansprüche**

1. Vorrichtung zum Sortieren und Sammeln von Stückgut, insbesondere Schnittholz (1), mit einem oberen, etwa horizontalen Sortierförderer (2), einer Reihe entlang des Sortierförderers (2) angeordneter Sammelkammern (3) für das vom Sortierförderer (2) sortiert abgeschiedene Gut und einem unterhalb der Sammelkammern (3) verlaufenden, ebenfalls etwa horizontalen Entnahmeförderer (10), wobei die kanalartigen Sammelkammern (3) jeweile abwärts geneigte, an absperrbare Vorkammern (5) od.dgl. anschließende Fürungsbahnen (4) und in Abhängigkeit von der Menge des anfallenden Gutes das Fassungsvermögen der Sammelkammern (3) vergrößernde Speichereinrichtungen aufweisen, dadurch gekennzeichnet, daß die Führungsbahnen (4) flacher als dem natürlichen Böschungswinkel eines Haufens des Stückgutes (1) entsprechend geneigt sind, daß die Vorkammern (5) mit einer Stufe in die Sammelkammern (3) übergehen und von diesen durch eine Stauklappe (6) trennbar sind und daß die Speichereinrichtungen einen den Führungsbahnen (4) entlang verlaufenden Sammelförderer (7) umfassen, der im Maße der Beschickung abwärts wandert und die vom Sortierförderer (2) abgeschiedenen, über die Vorkammer (5) und die Stauklappe (6) ausgerichteten Stückgüter (1) zu einer annähernd gleichmäßigen Schicht (1') mit von der Vorkammerstufe bestimmter Höhe sammelt.

2. Vorrichtung nach Anspruch 1, dadurch gekennzeichnet, daß die Sammelförderer (7) aus den Führungsbahnen (4) entlang angeordneten Rollen und verschiebbaren, am Ausgabeende der Sammelkammern (3) auswärts auf den Entnahmeförderer (10) abklappbaren Kammerböden (9) bestehen.

3. Vorrichtung nach Anspruch 1, dadurch gekennzeichnet, daß als Sammelförderer ein vorzugsweise Mitnehmer (8) aufweisender Endlosförderer (7) dient, an den am Ausgabeende der Sammelkammern (3) eine auswärts auf den Entnahmeförderer (10) abschwenkbare Bodenklappe (9) anschließt.

4. Vorrichtung nach einem der Ansprüche 1 - 3, dadurch gekennzeichnet, daß im Bereich der Vorkammerstufen eine bei geschlossener Stauklappe (6) den Sammelförderer (7) überbrückende Gutauflage (11) vorgesehen ist.


**Claims**

1. Apparatus for sorting and collecting discrete objects, particularly sawn timber (1), comprising an approximately horizontal upper sorting conveyor (2), a series of collecting chambers (3) which are provided along the sorting conveyor (2) and serve to receive the sorted material delivered from the sorting conveyor (2), and a taking conveyor (10), which extends below the collecting chambers (3) and is also approximately horizontal, wherein each of the channel-like collecting chambers (3) comprises downwardly inclined guideways (4), which succeed antechambers (5) or the like, which are adapted to be shut off, and said collecting chambers are provided with storage means, which increase the capacity of the collecting chambers (3) in dependence on the quantity of material which has been delivered, characterized in that the guideways (4) are inclined at an angle which is smaller than the natural angle of repose of a pile of the discrete objects (1), the antechambers (5) merge into the collecting chambers (3) via a step and are separable from the collecting chambers (3) by a retaining flap (6), and the storage means comprise a collecting conveyor (7), which extends along the guideways (4) and are lowered to an extent that depends on the feeding, whereby the discrete objects (1) which have been delivered from the sorting conveyor (2) and aligned by the ante-chamber (5) and the retaining flap (6) are collected in an approximatelg uniform layer (1') having a height which is determined by the step at the ante-chamber,

2. Apparatus according to claim 1, characterized in that the collecting conveyors (7) consist of rollers, which are provided along the guidewags (4)) and displaceable chamber bottoms (9), which at the delivery end of the collecting chambers (3) are adapted to be swung down outwardly onto the taking conveyor (10),

3. Apparatus according to claim 1, characterized in that the collecting convegor consists of an endless conveyor (7), which is preferably provided with flights (8) and which is succeeded at the delivery end of the collecting chambers (3) by a bottom flap (9), which is adapted to be swung down onto the taking conveyor (10).

4. Apparatus according to any of claims 1 to 3, characterized in that a material support (11) is provided adjacent to the steps at the antechambers and said support bridges the collecting convegor (7) when the retaining flap (8) is closed.


**Revendications**

1. Appareil pour le triage et le rassemblement d'une matière en vrac, en particulier de bois de sciage (1), comportant un transporteur supérieur de triage (2) à peu près horizortal, une série de chambres collectrices (3) disposées le long du transporteur de triage (2) pour la matière séparée à l'état trié par le transporteur de triage (2) et un transporteur (10) de prélèvement également à peu près horizontal passant en dessous des chambres collectrices (3), les chambres collectrices (3), similaires à des canaux présentant chacune des voies de guidage (4) inclinées vers le bas, se raccordant à des préchambres (5) ou analogues pouvant être bloquées, et des dispositifs de stockage agrandissant la capacité des chambres collectrices (3) sous la dépendance de la quantité de matière qui se présente, caractérisé par le fait que les voies de guidage (4) sont inclinées de façon plus aplatie que l'angle naturel de talutage d'un tas de la matière en vrac (1), que les préchambres (5) rejoignent par un gradin les chambres collectrices (3) et peuvent être séparées de celles-ci par un volet de retenue et que les dispositifs de stockage comprennent un transporteur collecteur (7) passant le long des voies de guidage (4), qui, dans la mesure de l'alimentation, se déplace vers le bas et rassemble les matières en vrac (1) alignées en passant par la préchambre (5) et le volet de retenue (6), en une couche approximativement uniforme (1'), de hauteur déterminée par le gradin de préchambre.

2. Appareil selon la revendication 1, caractérisé par le fait que les transporteurs collecteurs (7)

**0 129 532**

sont formés de rouleaux disposés le long des voies de guidage (4) et de fonds de chambre (9) pouvant coulisser, pouvant être rabattus vers l'extérieur à l'extrémité de sortie des chambres collectrices (3), sur le transporteur (10) de prélèvement.

3. Appareil selon la revendication 1, caractérisé par le fait que, comme transporteur collecteur, est utilisé un transporteur sans fin (7) présentant de préférence des entraîneurs (8) et auquel fait suite, à l'extrémité de sortie des chambres collectrices (3), un volet de fond (9) pouvant pivoter vers l'extérieur sur le transporteur (10) de prélèvement.

4. Appareil selon l'une des revendications 1 à 3, caractérisé par le fait que dans la région des gradins de préchambre est prévu un appui (11) de matière franchissant le transporteur collecteur (7) quand le volet de retenue (6) est fermé.